# EUROPÄISCHE PATENTSCHRIFT

(11) **EP 2 195 549 B1**
(45) Veröffentlichungstag und Bekanntmachung des Hinweises auf die Patenterteilung: **06.03.2013**
(21) Anmeldenummer: 08801148.1
(22) Anmeldetag: 11.08.2008
(51) Int. Cl.: F16D 25/08, F15B 7/08, B60T 11/16

(54) **GEBERZYLINDER, INSBESONDERE FÜR DIE KUPPLUNGS- ODER BREMSBETÄTIGUNG EINES KRAFTFAHRZEUGES**
MASTER CYLINDER, ESPECIALLY FOR CLUTCH OR BRAKE ACTUATION OF A MOTOR VEHICLE
MAÎTRE-CYLINDRE, NOTAMMENT POUR L'ACTIONNEMENT D'UN FREIN OU D'UN EMBRAYAGE D'UN VÉHICULE À MOTEUR

(30) Priorität: 30.08.2007 DE 102007040966
(43) Veröffentlichungstag der Anmeldung: 16.06.2010
(73) Patentinhaber: Schaeffler Technologies AG & Co. KG, 91074 Herzogenaurach (DE)
(72) Erfinder: RIBEIRO, Saulo, CEP-18051-450 Sorocaba (BR); FRANCA, Renato, CEP-18015-140 Sorocaba (BR)
(86) Internationale Anmeldenummer: PCT/DE2008/001316
(87) Internationale Veröffentlichungsnummer: WO 2009/026878

(56) Entgegenhaltungen:
- EP-A- 0 295 395
- US-A- 5 191 765

## Beschreibung

Die Erfindung betrifft einen Geberzylinder, insbesondere für die Kupplungs- oder Bremsbetätigung eines Kraftfahrzeuges.

Aus DE 195 23 215 B4 ist die Ausbildung eines Kolbens für einen Geberzylinder bekannt, wobei der Kolben aus einer Kolbenschafthülse mit einem Boden und zwei in der Kolbenschafthülse spielfrei angeordneten Halteschalen besteht, und die Halteschalen am pedalseitigen Ende der Kolbenschafthülse eine kugelpfannenartige Ausnehmung aufweisen, in der ein Kugelkopf einer Kolbenstange verschnappt und kraftschlüssig gehalten ist. Die Kolbenstange kann durch ihre Befestigung mittels des Kugelkopfes eine Schwenkbewegung ausführen.

In DE 199 60 335 A1 wird ein Geberzylinder beschrieben, bei welchem der Kolben ebenfalls zwei Halteschalen umfasst, die in einer Kolbenschafthülse sitzen. Die Halteschalen bilden auch hier eine kugelkalottenförmige Ausnehmung für die Aufnahme eines Kugelkopfes der Kolbenstange.

DE 10 2006 058 193 A1 beschreibt eine bereits verbesserte Lösung, bei welcher die Befestigung der Kolbenstange in der Kolbenschafthülse mittels eines Befestigungselementes, vorzugsweise in Form eines O-Rings erfolgt, der mit der Kolbenschafthülse und mit der Kolbenstange in Wirkverbindung steht.

Die Befestigung des Dichtungsbalges erfolgt bei den vorgenannten Lösungen über separate Befestigungselemente.

Die konstruktive Gestaltung der vorgenannten Lösungen ist relativ aufwändig, da viele Einzelteile erforderlich sind. Weiterhin ist das Dämpfungsverhalten dieser Ausführungen meist ungenügend, so dass es bei stoßartigen Belastungen zum Bruch kommen kann.

Aus der EP 0 295 395 A1 ist ferner ein Geberzylinder bekannt, bei welchem in einem Zylindergehäuse ein Kolben axial verschiebbar ist, und der Kolben eine stirnseitige Ausnehmung aufweist, in welcher ein kolbenseitiges Ende einer Kolbenstange gelagert ist, wobei zwischen dem Zylindergehäuse und dem Kolben ein Verschlussstück sitzt, das den Dichtungsbalg an dessen kolbenseitigem Ende axial fixiert.

Aufgabe der Erfindung ist es, einen Geberzylinder z.B. für die Kupplungs- oder Bremsbetätigung eines Kraftfahrzeuges zu entwickeln, der einen einfachen und kostengünstigen Aufbau aufweist und eine hohe Lebensdauer gewährleistet.

Diese Aufgabe wird erfindungsgemäß mit den Merkmalen des ersten Patentanspruchs gelöst. Vorteilhafte Ausgestaltungen ergeben sich aus den Unteransprüchen.

Bei dem Geberzylinder, welcher z.B. für die Kupplungs- oder Bremsbetätigung eines Kraftfahrzeuges einsetzbar ist, ist in einer Führungshülse ein Kolben axial verschiebbar gelagert, und der Kolben weist eine stirnseitige Ausnehmung auf, in welcher ein kolbenseitiges Ende einer Kolbenstange gelagert ist, wobei die Abdichtung zwischen Führungshülse und Kolbenstange mittels eines Dichtungsbalges erfolgt und zwischen Führungshülse und Kolben eine Zwischenhülse sitzt, die mit der Führungshülse in Wirkverbindung steht und die den Dichtungsbalg an dessen kolbenseitigem Ende axial fixiert. Dadurch ist eine einfache Anbindung des Dichtungsbalges an den Geberzylinder möglich. Weiterhin ist ein stirnseitiger, radial nach innen weisender Absatz vorgesehen, der einen axialen Anschlag für die Kolbenstange bildet.

Die Zwischenhülse weist an ihrer Außenkontur eine zweite Nut auf, in welche ein Sicherungselement eingreifbar ist, welches in Verbindung mit einem Anschlag an der Innenkontur der Führungshülse eine axiale Bewegung der Zwischenhülse begrenzt.

Zusätzlich weist die Zwischenhülse in Richtung zur Kolbenstange vor der zweiten Nut eine erste Nut auf, in die das Ende des Dichtungsbalges eingreifbar ist, wodurch dessen axiale Fixierung gewährleistet ist. Zur zusätzlichen Absicherung weist das Ende des Dichtungsbalges am Innendurchmesser eine umlaufende Ausnehmung auf, in die ein Bereich der Zwischenhülse eingreifbar ist. Vorteilhafter Weise ist der Dichtungsbalg an seinem Ende im Wesentlichen zylindrisch ausgebildet und dichtet zwischen Innenkontur der Führungshülse und Außenkontur der Zwischenhülse zuverlässig ab. Weiterhin liegt der Dichtungsbalg an seinem Ende an einem Absatz der Führungshülse an.

Weiterhin besitzt die Zwischenhülse in Bezug auf die Kolbenstange nach der zweiten Nut eine dritte Nut in ihrem Außendurchmesser, wobei in der dritten Nut ein Dichtungsring sitzt, der zur Innenkontur der Führungshülse abdichtet.

Zur Gewährleistung der Montage weist die Zwischenhülse an ihrem in Richtung zur Kolbenstange weisenden Ende axial verlaufende Schlitze auf.

An das kolbenseitige Ende der Kolbenstange schließt sich eine flanschartige Durchmessererweiterung an, mit welcher die Kolbenstange in einer Endposition an den Absatz der Zwischenhülse anlegbar ist.

Weiterhin weist die Zwischenhülse an ihrem kolbenstangenseitigen Ende eine Montageöffnung auf, deren Durchmesser kleiner als der Durchmesser der flanschartigen Durchmessererweiterung und größer als der Durchmesser der Kolbenstange ist, wobei die Montageöffnung in Verbindung mit den Schlitzen auf einen Durchmesser erweiterbar ist, der das Hindurchschieben der flanschartigen Durchmessererweiterung der Kolbenstange gestattet.

Vorteilhafter Weise erweitert sich die Montageöffnung nach außen durch eine das Hindurchschieben der flanschartigen Durchmessererweiterung begünstigende Montageschräge.

Die Innenkontur der Führungshülse verringert sich aus Richtung der Kolbenstange von einem ersten Durchmesser, der das Ende des Dichtungsbalges aufnimmt, auf einen zweiten Durchmesser, in dessen Bereich das Sicherungselement angeordnet ist, wodurch der Anschlag für die Stirnseite des Dichtungsbalges gebildet wird. Weiterhin verringert sich die Innenkontur vom zweiten Durchmesser auf einen dritten Durchmesser, zu welchem der in der dritten Nut sitzende Dichtungsring abdichtet, wodurch der Anschlag für das Sicherungselement gebildet wird.

Das kolbenseitige Ende der Kolbenstange ist mit dem Kolben mittels eines Verbindungselementes gekoppelt, wobei eine gelenkige Verbindung zu gewährleisten ist.

Mit der erfindungsgemäßen Lösung ist eine überraschend einfache konstruktive Ausführung des Geberzylinders möglich, wobei die Anzahl der benötigten Bauteile auf ein Minimum reduziert werden kann. Weiterhin ist eine einfache Gestaltung der einzelnen Elemente wie Kolben, Kolbenstange, Dichtungsbalg möglich. Durch die Federwirkung des über einen langen Bereich abdichtenden Endes des Dichtungsbalges sowie über den Dichtungsring und das Befestigungselement werden Vibrationen und Laststöße gedämpft bzw. eliminiert. Dadurch kann die Lebensdauer des Geberzylinders wesentlich verlängert werden.

Die Erfindung wird nachfolgend anhand eines Ausführungsbeispiels und zugehöriger Zeichnung näher erläutert. Es zeigen:
- Fig. 1:: Längsschnitt durch das kolbenstangenseitige Ende eines Geberzylinders,
- Fig. 2:: Längsschnitt der Zwischenhülse.

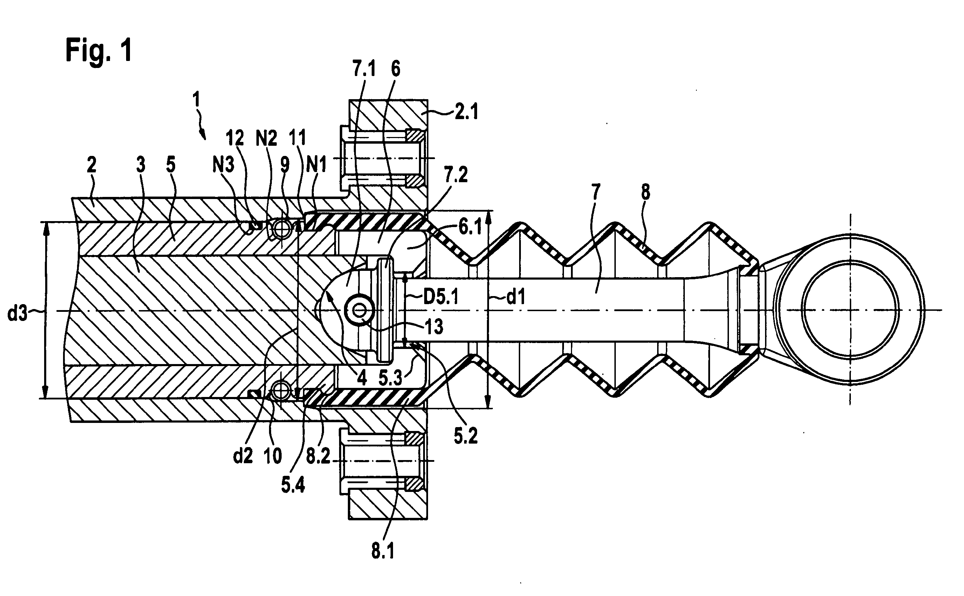

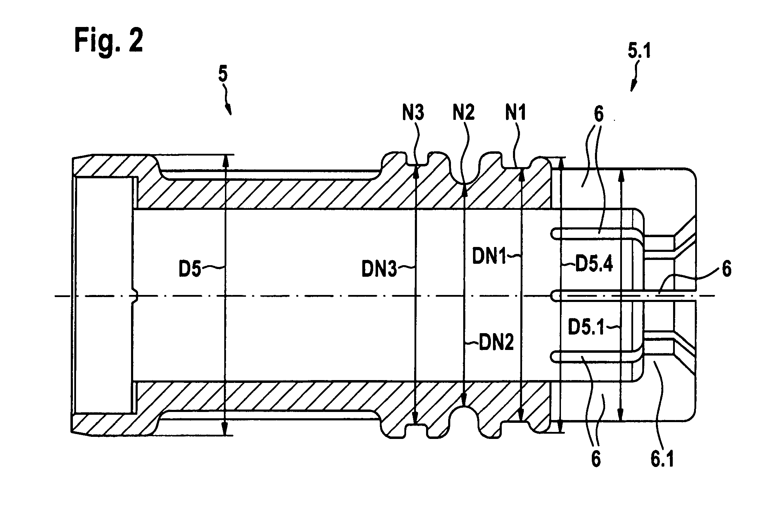

In Figur 1 ist der Längsschnitt durch das kolbenstangenseitige Ende eines Geberzylinders dargestellt. Figur 2 zeigt die Einzelteildarstellung der Zwischenhülse im Längsschnitt. Der Geberzylinder 1 weist eine Führungshülse 2 auf. In der Führungshülse 2 ist ein Kolben 3, der am Ende eine Ausnehmung 4 aufweist, in einer Zwischenhülse 5 axial verschiebbar gelagert. Die Zwischenhülse 5 weist gem. Fig. 2 ein Ende 5.1 auf, welches mit axial verlaufenden Schlitzen 6 versehen ist. Weiterhin sind am Ende 5.1 der Zwischenhülse 5 ein radial nach innen gerichteter Absatz 6.1 und eine zentrische Montageöffnung 5.2 vorgesehen. Die Montageöffnung erweitert sich nach außen durch eine sich anschließende Montageschräge 5.3.

An das mit den Schlitzen 6 versehene Ende 5.1 der Zwischenhülse 5 schließt sich in der Außenkontur der Zwischenhülse 5 eine erste Nut N1, davon beabstandet eine zweite Nut N2 und davon wiederum beabstandet eine dritte Nut N3 an.

Die Zwischenhülse 5 weist einen maximalen Außendurchmesser D5 auf. Der Außendurchmesser D5.1 ist im Bereich 5.1 im Vergleich zum Durchmesser D5 reduziert. Die Tiefe der ersten Nut N1 und damit der in diesem Bereich vorhandene Durchmesser N1 entspricht im Wesentlichen dem Durchmesser D5.1. Der zwischen dem Ende 5.1 und der ersten Nut N1 nach außen gewölbte Bereich 5.4 der Zwischenhülse 5 weist ebenfalls einen etwas geringeren Durchmesser D5.4 auf.

Gem. Fig. 1 ist am Kolben 3 eine Kolbenstange 7 mit ihrem kolbenseitigen Ende 7.1 in der korrespondierenden Ausnehmung 4 des Kolbens 3 gelagert/befestigt. Die Oberfläche des Endes 7.1 der Kugelstange 7 ist dabei halbkugelförmig ausgebildet. An das halbkugelförmige Ende 7.1 der Kugelstange 7 schließt sich eine flanschartige Durchmessererweiterung 7.2 an, die in der dargestellten Endlage gem. Fig. 1 an dem radial nach innen gerichteten Absatz 6.1 der Zwischenhülse 5 anschlägt.

Die Innenkontur der Führungshülse 2 weist in Richtung zur Kolbenstange 7 einen ersten Durchmesser d1 auf und verringert sich von diesem ersten Durchmesser d1 auf einen zweiten Durchmesser d2, wodurch ein Absatz 11 gebildet wird. Von dem zweiten Durchmesser d2 verringert sich die Innenkontur der Führungshülse auf einen dritten Durchmesser d3, wodurch ein Anschlag 10 entsteht.

Das Ende 8.1 des Dichtungsbalges 8 ist im Wesentlichen zylinderartig ausgebildet und reicht zwischen einem ersten Innendurchmesser d1 der Führungshülse 2 und der Zwischenhülse 5 bis in die erste Nut N1 der Zwischenhülse 5, wobei das Ende 8.1 des Dichtungsbalges 8 am Innendurchmesser eine Ausnehmung 8.2 aufweist, in die der Bereich 5.4 der Zwischenhülse 5 eingreift. Dadurch wird eine äußerst zuverlässige Abdichtung mittels des Dichtungsbalges 8 gewährleistet. Das andere nicht näher bezeichnete Ende des Dichtungsbalges 8 dichtet die Kolbenstange 7 an ihrem dem Kolben 3 abgewandten Ende an ihrem Außendurchmesser ab.

In der zweiten Nut N2 der Zwischenhülse 5 in dem Bereich des zweiten Innendurchmessers d2 der Führungshülse 2 sitzt ein Sicherungselement 9, z.B. in Form einer Federklammer. Durch dieses Sicherungselement 9 wird in Zusammenhang mit dem Anschlag 10 der Führungshülse 2 eine axiale Sicherung der Zwischenhülse 5 gewährleistet.

In der dritten Nut N3 ist ein Dichtungsring 12 (z.B. ein O-Ring) angeordnet, der in Richtung zum dritten Innendurchmesser d3 der Führungshülse 2 abdichtet.

Zur Montage wird die Kolbenstange 7 mit ihrem Ende 7.1 durch die Montageöffnung 5.2 der Zwischenhülse 5 unter Zuhilfenahme der Montageschräge 5.3 geschoben, wobei sich die Montageöffnung 5.2 durch die Schlitze 6 im Ende 5.1 der Zwischenhülse 5 radial erweitert, so dass die flanschartige Durchmesserweiterung 7.2 der Kolbenstange 7 hindurchpasst. Dann federt das Ende zurück, so dass der Absatz 6.1 des Endes der Zwischenhülse 5 einen axialen Anschlag für die Durchmessererweiterung bildet. Nun wird die Kolbenstange 7 soweit durch die Zwischenhülse 5 geschoben, dass deren Ende 7.1 darüber hinausragt und der Kolben 3 mittels des Befestigungselementes 13 damit verbunden werden kann. Anschließend wird die Dichtung 12 in der Nut N3, das Sicherungselement 9 in der Nut N2 positioniert. Der Dichtungsbalg 8 wird mit seinem Ende 8.1 über das Ende 6 der Zwischenhülse 5 geschoben, bis es über dessen Bereich 5.4 in die erste Nut N1 schnappt, wobei gleichzeitig der Bereich 5.4 in die Ausnehmung 8.2 des Dichtungsbalges 8 eingreift.

### Bezugszeichenliste

- 1: Geberzylinder
- 2: Führungshülse
- 3: Kolben
- 4: Ausnehmung
- 5: Zwischenhülse
- 5.1: Ende der Zwischenhülse
- 5.2: Montageöffnung der Zwischenhülse
- 5.3: Montageschräge der Zwischenhülse
- 5.4: Bereich der Zwischenhülse
- 6: Schlitze
- 6.1: Absatz
- 7: Kolbenstange
- 7.1: kolbenseitiges Ende der Kolbenstange 7
- 7.2: Durchmessererweiterung
- 8: Dichtungsbalg
- 8.1: Ende des Dichtungsbalges
- 8.2: Ausnehmung
- 9: Sicherungselement
- 10: Anschlag
- 11: Absatz
- 12: Dichtungsring
- 13: Befestigungselement
- d1: erster Durchmesser der Führungshülse 2
- d2: zweiter Durchmesser der Führungshülse 2
- d3: dritter Durchmesser der Führungshülse 2
- D5: Außendurchmesser der Zwischenhülse 5
- D5.1: Außendurchmesser der Zwischenhülse im Bereich des Endes 5.1, welches die Schlitze 6 aufweist
- D5.4: Außendurchmesser der Zwischenhülse zwischen Ende 5.1 und Nut N1
- DN1: Außendurchmesser der Zwischenhülse in der ersten Nut N1
- DN2: Außendurchmesser der Zwischenhülse in der zweiten Nut N2
- DN3: Außendurchmesser der Zwischenhülse in der dritten Nut N3
- N1: erste Nut
- N2: zweite Nut
- N3: dritte Nut

## Patentansprüche

1. Geberzylinder (1), insbesondere für die Kupplungs- oder Bremsbetätigung eines Kraftfahrzeuges, bei welchem in einer Führungshülse (2) ein Kolben (3) axial verschiebbar ist, und der Kolben (3) eine stirnseitige Ausnehmung (4) aufweist, in welcher ein kolbenseitiges Ende (7.1) einer Kolbenstange (7) gelagert ist, und die Abdichtung zwischen Führungshülse (2) und Kolbenstange (7) mittels eines Dichtungsbalges (8) erfolgt, wobei zwischen Führungshülse (2) und Kolben (3) eine Zwischenhülse (5) sitzt, die mit der Führungshülse (2) in Wirkverbindung steht und die den Dichtungsbalg (8) an dessen kolbenseitigem Ende (8.1) axial fixiert, **dadurch gekennzeichnet, dass** der Dichtungsbalg (8) an seinem Ende (8.1) an einem Absatz (11) der Führungshülse (2) anliegt.

2. Geberzylinder nach Anspruch 1, wobei die Zwischenhülse (5) an ihrer Außenkontur eine zweite Nut (N2) aufweist, in welche ein Sicherungselement (9) eingreifbar ist, wobei das Sicherungselement (9) in Verbindung mit einem Anschlag (10) an einer Innenkontur der Führungshülse (2) eine axiale Bewegung der Zwischenhülse (5) begrenzt.

3. Geberzylinder nach Anspruch 2, wobei die Zwischenhülse (5) in Richtung zur Kolbenstange (7) vor der zweiten Nut (N2) eine erste Nut (N1) aufweist, in die das Ende (8.1) des Dichtungsbalges (8) eingreifbar ist.

4. Geberzylinder nach einem der Ansprüche 1 bis 3, wobei das Ende (8.1) des Dichtungsbalges (8) am Innendurchmesser eine Ausnehmung (8.2) aufweist, in die ein Bereich (5.4) der Zwischenhülse (5) eingreifbar ist.

5. Geberzylinder nach einem der Ansprüche 1 bis 4, wobei der Dichtungsbalg (8) an seinem Ende (8.1) im Wesentlichen zylindrisch ausgebildet ist und zwischen Innenkontur der Führungshülse (2) und Außenkontur der Zwischenhülse (5) abdichtet.

6. Geberzylinder nach einem der Ansprüche 2 bis 5, wobei die Zwischenhülse (5) in Bezug auf die Kolbenstange nach der zweiten Nut (N2) eine dritte Nut (N3) aufweist, in welcher ein Dichtungsring (12) sitzt, der zur Innenkontur der Führungshülse (2) abdichtet.

7. Geberzylinder nach einem der Ansprüche 1 bis 6, wobei die Zwischenhülse (5) an ihrem in Richtung zur Kolbenstange (7) weisenden Ende (5.1) axial verlaufende Schlitze (6) und einen stirnseitigen radial nach innen weisenden Absatz (6.1) aufweist, der einen axialen Anschlag für die Kolbenstange (7) bildet.

8. Geberzylinder nach Anspruch 7, wobei sich an das kolbenseitige Ende (7.1) der Kolbenstange (7) eine flanschartige Durchmessererweiterung (7.2) anschließt, mit welcher die Kolbenstange (7) in einer Endposition an den Absatz (6.1) der Zwischenhülse (5) anlegbar ist.

9. Geberzylinder nach Anspruch 8, wobei die Zwischenhülse (5) an ihrem Ende (5.1) eine Montageöffnung (5.2) aufweist, deren Durchmesser (D5.1) kleiner als der Durchmesser der flanschartigen Durchmessererweiterung (7.2) und größer als der Durchmesser der Kolbenstange (7) ist, und die Montageöffnung (5.2) in Verbindung mit den Schlitzen (6) auf einen Durchmesser erweiterbar ist, der das Hindurchschieben der flanschartigen Durchmessererweiterung (7.2) gestattet.

10. Geberzylinder nach Anspruch 9, wobei sich die Montageöffnung (5.2) nach außen durch eine das Hindurchschieben der flanschartigen Durchmessererweiterung (7.2) begünstigende Montageschräge (5.3) erweitert.

11. Geberzylinder nach einem der Ansprüche 6 bis 10, wobei sich die Innenkontur der Führungshülse (2) aus Richtung der Kolbenstange (7)
- von einem ersten Durchmesser (d1), der das Ende (8.1) des Dichtungsbalges (8) aufnimmt,
- auf einen zweiten Durchmesser (d2), in dessen Bereich das Sicherungselement (9) angeordnet ist,
- auf einen dritten Durchmesser (d3), zu welchem der in der dritten Nut (N3) sitzende Dichtungsring (12) abdichtet,
verringert.

12. Geberzylinder nach einem der Ansprüche 1 bis 11, wobei das kolbenseitige Ende (7.1) der Kolbenstange (7) mit dem Kolben (3) mittels eines Verbindungselementes (13) gekoppelt ist.

## Claims

1. Master cylinder (1), in particular for clutch or brake actuation of a motor vehicle, in which a piston (3) is axially displaceable in a guide sleeve (2) and the piston (3) has an end-face recess (4) in which a piston-side end (7.1) of a piston rod (7) is mounted, and sealing-off between the guide sleeve (2) and the piston rod (7) takes place by means of a concertina-type seal (8), there being seated between the guide sleeve (2) and the piston (3) an intermediate sleeve (5) which is operatively connected to the guide sleeve (2) and which fixes the concertina-type seal (8) axially at its piston-side end (8.1), **characterized in that** the concertina-type seal (8) bears at its end (8.1) against a shoulder (11) of the guide sleeve (2).

2. Master cylinder according to Claim 1, the intermediate sleeve (5) having on its outer contour a second groove (N2) into which a securing element (9) can be engaged, the securing element (9), in conjunction with a stop (10) on an inner contour of the guide sleeve (2), limiting an axial movement of the intermediate sleeve (5).

3. Master cylinder according to Claim 2, the intermediate sleeve (5) having in front of the second groove (N2) in the direction of the piston rod (7) a first groove (N1) into which the end (8.1) of the concertina-type seal (8) can be engaged.

4. Master cylinder according to one of Claims 1 to 3, the end (8.1) of the concertina-type seal (8) having on the inside diameter a recess (8.2) into which a region (5.4) of the intermediate sleeve (5) can be engaged.

5. Master cylinder according to one of Claims 1 to 4, the concertina-type seal (8) being designed essentially cylindrically at its end (8.1) and sealing off between the inner contour of the guide sleeve (2) and the outer contour of the intermediate sleeve (5).

6. Master cylinder according to one of Claims 2 to 5, the intermediate sleeve (5) having after the second groove (N2) with respect to the piston rod a third groove (N3) in which is seated a sealing ring (12) which seals off with respect to the inner contour of the guide sleeve (2).

7. Master cylinder according to one of Claims 1 to 6, the intermediate sleeve (5) having, at its end (5.1) pointing in the direction of the piston rod (7), axially running slots (6) and an end-face shoulder (6.1) which points radially inwards and which forms an axial stop for the piston rod (7).

8. Master cylinder according to Claim 7, the piston-side end (7.1) of the piston rod (7) being followed by a flange-like diametral widening (7.2), with which the piston rod (7) can be brought to bear in an end position against the shoulder (6.1) of the intermediate sleeve (5).

9. Master cylinder according to Claim 8, the intermediate sleeve (5) having at its end (5.1) a mounting orifice (5.2), the diameter (D5.1) of which is smaller than the diameter of the flange-like diametral widening (7.2) and is larger than the diameter of the piston rod (7), and the mounting orifice (5.2), in conjunction with the slots (6) being capable of being widened to a diameter which enables the flange-like diametral widening (7.2) to be pushed through.

10. Master cylinder according to Claim 9, the mounting orifice (5.2) widening outwards on account of a mounting slope (5.3) which is conducive to pushing through the flange-like diametral widening (7.2).

11. Master cylinder according to one of Claims 6 to 10, the inner contour of the guide sleeve (2) decreasing from the direction of the piston rod (7)
- from a first diameter (d1) which receives the end (8.1) of the concertina-type seal (8),
- to a second diameter (d2), in the region of which the securing element (9) is arranged,
- to a third diameter (d3), with respect to which the sealing ring (12) seated in the third groove (N3) seals off.

12. Master cylinder according to one of Claims 1 to 11, the piston-side end (7.1) of the piston rod (7) being coupled to the piston (3) by means of a connection element (13).

## Revendications

1. Maître-cylindre (1), en particulier pour l'actionnement d'un embrayage ou d'un frein d'un véhicule automobile, dans lequel un piston (3) peut être déplacé axialement dans un manchon de guidage (2), et le piston (3) présente un évidement frontal (4) dans lequel est montée une extrémité côté piston (7.1) d'une tige de piston (7), et l'étanchéité est réalisée entre le manchon de guidage (2) et la tige de piston (7) au moyen d'un soufflet d'étanchéité (8), entre le manchon de guidage (2) et le piston (3) reposant un manchon intermédiaire (5) qui est en liaison fonctionnelle avec le manchon de guidage (2) et qui fixe axialement le soufflet d'étanchéité (8) sur son extrémité côté piston (8.1), **caractérisé en ce que** le soufflet d'étanchéité (8) s'applique au niveau de son extrémité (8.1) contre un épaulement (11) du manchon de guidage (2).

2. Maître-cylindre selon la revendication 1, dans lequel le manchon intermédiaire (5) présente sur son contour extérieur une deuxième rainure (N2) dans laquelle peut s'engager un élément de fixation (9), l'élément de fixation (9), en liaison avec une butée (10) sur un contour intérieur du manchon de guidage (2), limitant un déplacement axial du manchon intermédiaire (5).

3. Maître-cylindre selon la revendication 2, dans lequel le manchon intermédiaire (5) présente dans la direction de la tige de piston (7) avant la deuxième rainure (N2) une première rainure (N1) dans laquelle peut s'engager l'extrémité (8.1) du soufflet d'étanchéité (8).

4. Maître-cylindre selon l'une quelconque des revendications 1 à 3, dans lequel l'extrémité (8.1) du soufflet d'étanchéité (8) présente, au niveau du diamètre intérieur, un évidement (8.2) dans lequel peut s'engager une région (5.4) du manchon intermédiaire (5).

5. Maître-cylindre selon l'une quelconque des revendications 1 à 4, dans lequel le soufflet d'étanchéité (8) est réalisé à son extrémité (8.1) sous forme essentiellement cylindrique et réalise l'étanchéité entre le contour intérieur du manchon de guidage (2) et le contour extérieur du manchon intermédiaire (5).

6. Maître-cylindre selon l'une quelconque des revendications 2 à 5, dans lequel le manchon intermédiaire (5) présente dans la région de la tige de piston après la deuxième rainure (N2) une troisième rainure (N3) dans laquelle repose une bague d'étanchéité (12) qui réalise l'étanchéité par rapport au contour intérieur du manchon de guidage (2).

7. Maître-cylindre selon l'une quelconque des revendications 1 à 6, dans lequel le manchon intermédiaire (5) présente au niveau de son extrémité (5.1) tournée dans la direction de la tige de piston (7) des fentes s'étendant axialement (6) et un épaulement (6.1) tourné radialement vers l'intérieur du côté frontal, lequel forme une butée axiale pour la tige de piston (7).

8. Maître-cylindre selon la revendication 7, dans lequel un élargissement de diamètre (7.2) de type bride se raccorde à l'extrémité côté piston (7.1) de la tige de piston (7), avec lequel élargissement de diamètre la tige de piston (7) peut être appliquée dans une position d'extrémité contre l'épaulement (6.1) du manchon intermédiaire (5).

9. Maître-cylindre selon la revendication 8, dans lequel le manchon intermédiaire (5) présente à son extrémité (5.1) une ouverture de montage (5.2) dont le diamètre (D5.1) est inférieur au diamètre de l'élargissement de diamètre (7.2) de type bride et supérieur au diamètre de la tige de piston (7), et l'ouverture de montage (5.2), en association avec les fentes (6) peut être élargie à un diamètre qui permet de faire passer l'élargissement de diamètre (7.2) de type bride.

10. Maître-cylindre selon la revendication 9, dans lequel l'ouverture de montage (5.2) s'élargit vers l'extérieur par un biseau de montage (5.3) favorisant le passage de l'élargissement de diamètre (7.2) de type bride.

11. Maître-cylindre selon l'une quelconque des revendications 6 à 10, dans lequel le contour intérieur du manchon de guidage (2) se rétrécit à partir de la tige de piston (7)
- depuis un premier diamètre (d1), qui reçoit l'extrémité (8.1) du soufflet d'étanchéité (8),
- à un deuxième diamètre (d2) dans la région duquel l'élément de fixation (9) est disposé,
- à un troisième diamètre (d3) par rapport auquel la bague d'étanchéité (12) reposant dans la troisième rainure (N3) réalise l'étanchéité.

12. Maître-cylindre selon l'une quelconque des revendications 1 à 11, dans lequel l'extrémité côté piston (7.1) de la tige de piston (7) est accouplée au piston (3) au moyen d'un élément de liaison (13).
